(19) Europäisches Patentamt
European Patent Office
Office européen des brevets

(11) **EP 4 223 851 A1**

(12) **EUROPEAN PATENT APPLICATION**
published in accordance with Art. 153(4) EPC

(43) Date of publication:
**09.08.2023 Bulletin 2023/32**

(21) Application number: **21875543.7**

(22) Date of filing: **27.09.2021**

(51) International Patent Classification (IPC):
**C09J 201/00** (2006.01)    **C09J 7/21** (2018.01)
**C09J 7/38** (2018.01)

(52) Cooperative Patent Classification (CPC):
**C09J 7/21; C09J 7/38; C09J 201/00**

(86) International application number:
**PCT/JP2021/035436**

(87) International publication number:
**WO 2022/071241 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165590**

(71) Applicant: **NITTO DENKO CORPORATION**
**Ibaraki-shi**
**Osaka 567-8680 (JP)**

(72) Inventors:
• **MORISHITA Hiromitsu**
**Ibaraki-shi, Osaka 567-8680 (JP)**
• **TAKASHIMA Atsushi**
**Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **FILAMENTOUS ADHESIVE BODY AND METHOD FOR PRODUCING FILAMENTOUS ADHESIVE BODY**

(57)    An object of the present invention is to provide a threadlike adhesive body having high impact resistance. The present invention relates to a threadlike adhesive body including a core material having a plurality of filaments and an adhesive, in which the adhesive covers the core material, the core material is impregnated with the adhesive, and the threadlike adhesive body contains 1 vol% to 55 vol% of voids.

*FIG.1*

**Description**

TECHNICAL FIELD

The present invention relates to a threadlike adhesive body and a method for producing the threadlike adhesive body.

BACKGROUND ART

When two or more kinds of articles are bonded to each other, an adhesive body such as a double-sided adhesive tape may be used. However, the double-sided adhesive tape usually has a certain width, and is not suitable for a case where the shape of an article to be bonded is complicated or a case where the width of an adhesion area is small.
Therefore, a double-sided adhesive tape cut to have a small width or a double-sided adhesive tape cut into a desired shape by punching is used.
However, the double-sided adhesive tape cut to have a small width has problems such as low reworkability due to insufficient strength of a substrate, being unsuitable for attachment to a curved article, and easy twisting of the front and back. In addition, although such problems do not occur in the double-sided adhesive tape cut into a desired shape by punching, there are problems such as an increase in the number of processing steps, large number of portions discarded by processing, and an increased cost.
In order to solve the above problems, a threadlike adhesive body is used. Since the threadlike adhesive body has high reworkability, can be deformed into various shapes, and has no concept of front and back, there is no problem of deterioration in handleability due to twisting. In addition, the threadlike adhesive body is easy to process, and is advantageous in terms of cost.
As the threadlike adhesive body, for example, Patent Literature 1 discloses a threadlike adhesive body characterized in that an adhesive is attached to a threadlike core material.

CITATION LIST

PATENT LITERATURE

Patent Literature 1: JPH03-231980A

SUMMARY OF INVENTION

TECHNICAL PROBLEM

However, according to the study of the present inventors, there has been a problem that the threadlike adhesive body according to the related art as disclosed in Patent Document 1 has low impact resistance.
The present invention has been made in view of the above circumstances according to the related art, and an object of the present invention is to provide a threadlike adhesive body having high impact resistance.

SOLUTION TO PROBLEM

As a result of intensive studies to solve the above problems, the present inventors have found that the above problems can be solved by providing voids in the threadlike adhesive body, and have completed the present invention.
That is, the present invention relates to the following <1> to <7>.

<1> A threadlike adhesive body including:

a core material having a plurality of filaments; and an adhesive,
in which the adhesive covers the core material, and the core material is impregnated with the adhesive, and
the threadlike adhesive body contains 1 vol% to 55 vol% of voids.

<2> The threadlike adhesive body according to <1>, which satisfies the following formula (1):

$$a/b \geq 2 \quad (1),$$

in which "a" means a length of a straight line which has the largest total length and can be disposed in the void, and "b" means a length of a portion having the largest width in a cross section obtained by cutting the threadlike adhesive body perpendicularly to a longitudinal direction.

<3> The threadlike adhesive body according to <1> or <2>, in which the number of twists of the core material is 1 twist/m to 500 twists/m.

<4> A method for producing a threadlike adhesive body including a core material having a plurality of filaments and an adhesive, the method including

coating coating the core material with a coating liquid containing the adhesive,
in which opening a fiber is not included.

<5> The method for producing the threadlike adhesive body according to <4>, in which a roller is used in the coating, and
a rotation speed of the roller is 0.3 times to 5.0 times a feeding speed of the core material.

<6> The method for producing a threadlike adhesive body according to <4> or <5>, in which a tension of 6.0 mN/dtex or less is applied to the core material in the coating.

<7> The method for producing a threadlike adhesive body according to any one of <4> to <6>, in which a viscosity of the coating liquid under a condition of a shear rate of 100 (1/s) is 0.03 Pa•s to 6 Pa•s, and the viscosity of the coating liquid under a condition of a shear rate of 0.1 (1/s) is 2 Pa•s to 140 Pa•s.

ADVANTAGEOUS EFFECTS OF INVENTION

The threadlike adhesive body according to the present invention has high impact resistance and excellent reworkability.

BRIEF DESCRIPTION OF DRAWINGS

[FIG. 1] FIG. 1 is a cross-sectional photograph of a threadlike adhesive body obtained in Example 2.
[FIG. 2] FIG. 2 is a schematic view of a joint body used to evaluate impact resistance in Examples.

DESCRIPTION OF EMBODIMENTS

Hereinafter, embodiments of the present invention will be described in more detail, but the present invention is not limited to the following embodiments at all.

[Threadlike Adhesive Body]

The threadlike adhesive body according to the present invention includes a core material having a plurality of filaments, and an adhesive.

Here, the threadlike means a shape in which a length in a longitudinal direction is sufficiently larger than a length in a width direction, a ratio of a length of a major axis to a length of a minor axis in a cross-sectional shape (major axis/minor axis) is, for example, 200 or less, and the shape can be bent in various directions and various angles like a thread.

The cross-sectional shape means a shape of a cross section obtained by cutting an object perpendicularly to the longitudinal direction. The minor axis means the shortest one of axes passing through a centroid of the cross-sectional shape. The major axis means the longest one of the axes passing through the centroid of the cross-sectional shape. The ratio of major axis/minor axis is preferably 100 or less, more preferably 50 or less, still more preferably 10 or less, particularly preferably 5 or less, and most preferably 3 or less.

Since the threadlike adhesive body according to the present invention can be bent in various directions and at various angles, the threadlike adhesive body can be bent in accordance with a shape of a bonding area, and can cope with the diversification of the shape of the bonding area.

<Core Material>

The threadlike adhesive body according to the present invention includes a core material. The core material is preferably in the form of a thread.

The core material is a multifilament thread that has a plurality of filaments, and is obtained by combining or twisting the plurality of filaments. When the core material is a multifilament thread, sufficient strength and stable physical properties can be obtained. As a result, a threadlike adhesive body having low variation in quality, excellent strength, and excellent adhesive force can be obtained.

The number of filaments in the core material is preferably 2 or more, more preferably 20 or more, and particularly preferably 40 or more, from the viewpoint of adhesive force.

On the other hand, in a case where the thickness (fineness) of the core material is kept at the same level, as the number of filaments increases, the filaments become thinner (the fineness decreases). The filaments, which become too thin, may lead to a decrease in strength of the core material and a decrease in handling properties. Therefore, the number of filaments is preferably 2,000 or less, more preferably 1,500 or less, and particularly preferably 1,000 or less.

The kind of the resin used for the filament is not particularly limited, and may be appropriately selected in accordance with properties such as required strength, mass, and hardness. Examples thereof include a material containing a polymer material such as a thermoplastic polymer, a thermosetting polymer, or a rubber.

Specific examples thereof include polymer materials such as rayon, cupra, acetate, promix, nylon, aramid, vinylon, vinylidene, polyvinyl chloride, acrylic, polyolefins (polyethylene, polypropylene, an ethylene-propylene copolymer, an ethylene-vinyl acetate copolymer, etc.), polyester resins (polyethylene terephthalate, etc.), vinyl chloride resins, vinyl acetate resins, polyimide resins, polyamide resins, fluororesins, polyurethane, polychlal, and polylactic acid; rubbers such as a synthetic rubber (a natural rubber, polyurethane, etc.); and a foamed body such as foamed polyurethane and foamed polychloroprene rubber. Among them, a polyester resin is preferred, and polyethylene terephthalate is more preferred.

A content of the filaments in the core material is preferably 10 mass% to 100 mass%, more preferably 50 mass% to 100 mass%, and particularly preferably 80 mass% to 100 mass%, from the viewpoint of preventing the impregnation of the core material with the adhesive.

The core material may contain various additives such as a filler (an inorganic filler, an organic filler, etc.), an anti-aging agent, an antioxidant, an ultraviolet absorber, an antistatic agent, a lubricant, a plasticizer, and a colorant (a pigment, a dye, etc.) as necessary. A known or common surface treatment such as a corona discharge treatment, a plasma treatment or application of an undercoating agent may be performed on a surface of the core material.

The form of the core material is not particularly limited, and may be appropriately adjusted in accordance with properties such as required strength, mass, and hardness.

The cross-sectional shape of the core material is typically a circular shape, and may be various shapes such as an elliptical shape and a polygonal shape in addition to a circular shape.

The core material may have a plurality of filaments, and may be a thread obtained by twisting and combining a filament with a spanyarn, a finished yarn, a hollow yarn, or the like. Examples of the finished yarn include finished yarns generally called textured yarns, bulky yarns, and stretch yarns that have been subjected to crimping, bulking, or the like.

The thickness of the core material is not particularly limited, and may be appropriately adjusted so that the thickness of the threadlike adhesive body is appropriate depending on the application.

The number of twists of the core material is preferably 1 twist/m or more. When the number of twists is 1 twist/m or more, it is easy to form a void described below, and the impact resistance of the threadlike adhesive body is improved. The number of twists of the core material is more preferably 20 twists/m or more, and still more preferably 50 twists/m or more.

On the other hand, in order to sufficiently deform the core material during bonding of a plurality of articles, and in order to increase the adhesion amount of the adhesive per unit length, it is preferable that the twisting of the core material is not too strong. Therefore, the number of twists of the core material is preferably 500 twists/m or less, more preferably 300 twists/m or less, and still more preferably 100 twists/m or less.

In a case where the core material is twisted, it is preferable to control a twist coefficient K represented by the following formula (A) from the same viewpoint as described above. The twist coefficient K is an index for discussing the influence of the twist (influence on the unity of the core material, the ease of deformation, the adhesion amount of the adhesive, etc.) regardless of the thickness of the core material. That is, although the influence of the number of twists on the core material varies depending on the thickness of the core material, it is indicated that the influence of twists on the core material is substantially the same regardless of the thickness of the core material if the twist coefficient K is the same.

The twist coefficient K is preferably 0 or more, and more preferably more than 0. On the other hand, when the twist coefficient K is 200 or less, the flexibility of the core material and the threadlike adhesive body is improved, and it is easy to attach the threadlike adhesive body to a complicated shape such as a curved portion, a bent portion, and an uneven portion, or a narrow portion. Therefore, the twist coefficient K is preferably 200 or less, more preferably 100 or less, and still more preferably less than 50.

[Formula 1]

$$K = T/\sqrt{10000/D} \quad \cdot \cdot \cdot \quad (A)$$

In the formula (A), K represents a twist coefficient, T represents the number of twists (twists/m), and D represents a fineness (dtex).

A content of the core material in the threadlike adhesive body is preferably 10 mass% or more, more preferably 20 mass% or more, and particularly preferably 30 mass% or more, from the viewpoint of preventing a decrease in strength of the threadlike adhesive body. In addition, the content of the core material in the threadlike adhesive body is preferably 90 mass% or less, more preferably 80 mass% or less, and particularly preferably 70 mass% or less from the viewpoint of preventing the core material from coming out to the surface.

<Adhesive>

The threadlike adhesive body according to the present invention includes an adhesive. The adhesive covers the core material, and the core material is impregnated with the adhesive.

The adhesive preferably covers an entire circumference of the surface of the core material in the longitudinal direction. The entire circumference of the surface of the core material refers to the entire circumferential surface of the core material, and means the entire 360° circumference of the surface of the core material around a center line of the core material in the longitudinal direction.

However, an end surface of the core material may or may not be covered with the adhesive. For example, in a case where the threadlike adhesive body is cut during the production or use, the end surface of the core material may not be covered with the adhesive.

By covering the entire circumference of the surface of the core material in the longitudinal direction with the adhesive, a threadlike adhesive body having excellent strength can be obtained. It is presumed that this is because the core material does not protrude to the surface, and thus stress is prevented from concentrating on a part of the core material to cause breaking.

The coverage rate of the core material with the adhesive (the area (%) of the adhesive per unit area of the surface of the core material) is preferably 50 area% or more, more preferably 80 area% or more, still more preferably 90 area% or more, and particularly preferably 95 area% or more. When the coverage rate of the core material is 50 area% or more, breakage of the core material can be prevented, and the threadlike adhesive body having excellent strength can be obtained.

The coverage rate of the core material can be calculated using, for example, an X-ray CT apparatus (Xradia 520 Versa, manufactured by Zeiss, tube voltage 60 kV, tube current 83 $\mu$A, pixel size 1.5 $\mu$m/pixel). Specifically, 1601 continuous transmission images for the entire circumference of the threadlike adhesive body from 0° to 360° are captured. Regarding data obtained by three-dimensionally reconstructing the obtained images using image analysis software [Image J, AVIZO (manufactured by Thermo Fisher Scientific)], identification is performed by subjecting the core material, the adhesive, and the air to ternarization and noise removal based on luminance. The identification is performed by checking the luminance of each of the air and the adhesive and setting a first threshold value by an intermediate value thereof, and further checking the luminance of each of the adhesive and the core material and setting a second threshold value by an intermediate value thereof. Using images obtained by the ternarization, an area of a core material-air interface (an interface 1) and an area of a core material-adhesive interface (an interface 2) are calculated, and the coverage rate is determined by the following formula.

$$\text{Coverage rate (\%)} = \{\text{area of interface 2/(area of interface 1 + area of interface 2)}\} \times 100$$

The interface 1 excludes an interface between the core material and the void of the threadlike adhesive body according to the present invention. In a case where the filament is a hollow fiber, the interface 1 excludes the interface between the core material and the void inside the filament.

Furthermore, the interface 2 is intended to be an interface between the adhesive and air. The interface 2 excludes an interface between the adhesive and the void of the threadlike adhesive body according to the present invention. In a case where the filament is a hollow fiber, the interface 2 excludes the interface between the adhesive and the void inside the filament.

Here, "the core material is impregnated with the adhesive" means that the adhesive enters and is present between the plurality of filaments in the core material. When the core material is impregnated with the adhesive, the adhesion between the adhesive and the core material is maintained, both are hardly debonded, and the strength of the threadlike adhesive body is improved.

The kind of the adhesive is not particularly limited, and examples thereof include an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive.

Among them, an acrylic adhesive and a rubber-based adhesive are preferable, and an acrylic adhesive is more preferable, from the viewpoint of tackiness. One of the adhesives may be used alone, or two or more kinds thereof may be used in combination.

The acrylic adhesive is an adhesive containing, as a main component, a (meth)acrylic acid alkyl ester such as ethyl acrylate, butyl acrylate, 2-ethylhexyl acrylate, isooctyl acrylate, and isononyl acrylate, and, as a main agent, a polymer obtained by adding a modifying monomer such as acrylonitrile, vinyl acetate, styrene, methyl methacrylate, acrylic acid, maleic anhydride, vinylpyrrolidone, glycidyl methacrylate, dimethylaminoethyl methacrylate, hydroxyethyl acrylate, and acrylamide to the above (meth)acrylic acid alkyl ester, if necessary.

The rubber-based adhesive is an adhesive containing, as a main agent, a rubber-based polymer such as a natural rubber, a styrene-isoprene-styrene block copolymer, a styrene-butadiene-styrene block copolymer, a styrene-ethylene-butylene-styrene block copolymer, a styrene-butadiene rubber, polybutadiene, polyisoprene, polyisobutylene, a butyl rubber, a chloroprene rubber, and a silicone rubber.

The adhesive may appropriately contain tackifying resins such as rosin-based one, terpene-based one, styrene-based one, aliphatic petroleum-based one, aromatic petroleum-based one, xylene-based one, phenol-based one, coumarone-indene-based one, and hydrogenated products thereof, and various additives such as a crosslinking agent, a viscosity modifier (thickener), a leveling agent, a release modifier, a plasticizer, a softener, a filler, a colorant (a pigment, a dye, etc.), a surfactant, an antistatic agent, a preservative, an age resister, an ultraviolet absorber, an antioxidant, and a light stabilizer.

As the adhesive, either a solvent type adhesive or a water-dispersible type adhesive may be used. From the viewpoint of enabling high-speed coating, being environmentally friendly, and having a small influence (swelling or dissolving) on the core material caused by the solvent, a water-dispersed type adhesive is preferred.

Specifically, the adhesion amount of the adhesive (the mass of the adhesive per unit length) is preferably 2 mg/m or more, more preferably 5 mg/m or more, and still more preferably 8 mg/m or more. On the other hand, when the adhesion amount of the adhesive is excessive, it is necessary to apply the adhesive to the core material a plurality of times in the production process, or it takes time to dry the applied adhesive, resulting in a low production efficiency. Therefore, the adhesion amount of the adhesive is preferably 200 mg/m or less, more preferably 180 mg/m or less, and still more preferably 160 mg/m or less.

The content of the adhesive in the threadlike adhesive body is preferably 10 mass% or more, more preferably 20 mass% or more, and particularly preferably 30 mass% or more, from the viewpoint of increasing the coverage rate of the core material. In addition, the content of the adhesive in the threadlike adhesive body is preferably 90 mass% or less, more preferably 80 mass% or less, and particularly preferably 70 mass% or less, from the viewpoint of preventing a decrease in strength of the threadlike adhesive body.

<Characteristics of Threadlike Adhesive Body>

The threadlike adhesive body according to the present invention contains 1 vol% to 55 vol% of voids.

Here, the above void means a gap present between a plurality of filaments in the core material. When the filament is a hollow yarn, the void does not include a void inside the filament.

The content of voids in the threadlike adhesive body according to the present invention (hereinafter, may be referred to as "the percentage of voids in the threadlike adhesive body") is 1 vol% or more, that is, not all of the filaments in the core material are impregnated with the adhesive without any gap, and gaps are present between plural of the filaments. As described above, when the percentage of voids in the threadlike adhesive body is 1 vol% or more, the threadlike adhesive body can deform and release stress when an impact is applied to the threadlike adhesive body, and thus the impact resistance of the threadlike adhesive body is improved. The percentage of voids in the threadlike adhesive body is preferably more than 1 vol%, more preferably 3 vol% or more, and particularly preferably 5 vol% or more.

In addition, when the percentage of voids in the threadlike adhesive body is 55 vol% or less, the amount of the adhesive with which the core material is impregnated does not become too small, the adhesion between the adhesive and the core material is maintained, and the adhesive and the core material can be prevented from being debonded. The percentage of voids in the threadlike adhesive body is preferably 50 vol% or less, more preferably 47 vol% or less, still more preferably 45 vol% or less, particularly preferably 30 vol% or less, and most preferably 20 vol% or less.

The percentage of voids in the threadlike adhesive body can be measured according to the method described in Examples.

The threadlike adhesive body according to the present invention preferably satisfies the following formula (1).

$$a/b \geq 2 \quad (1)$$

In the formula (1), "a" means a length of a straight line which has the largest total length and can be disposed in the void, and "b" means a length of a portion having the largest width in a cross section obtained by cutting the threadlike adhesive body perpendicularly to a longitudinal direction.

When the above formula (1) is satisfied, the deviation of the voids in the threadlike adhesive body can be reduced, and thus the impact resistance of the threadlike adhesive body is improved. In addition, when the above formula (1) is satisfied, rubbing between the filaments is increased during the impact, and impact energy is converted into thermal energy, so that the impact resistance of the threadlike adhesive body is improved. The value of a/b is preferably 2 or more, more preferably 3 or more, and particularly preferably 5 or more.

The value of a/b can be measured by the method described in Examples. The value of a/b is a value in a threadlike adhesive body having a length of 2.7 mm.

In addition, the thickness of the threadlike adhesive body is preferably 50 $\mu$m to 2000 $\mu$m, and more preferably 100 $\mu$m to 1000 $\mu$m, from the viewpoint of strength and handleability.

[Method for Producing Threadlike Adhesive Body]

A method for producing the threadlike adhesive body according to the present invention (hereinafter, may be referred to as "production method according to the present invention") includes coating a core material with a coating liquid containing an adhesive.

The coating liquid may be applied to the core material, for example, by dipping, immersion, coating, or the like, and may be heated and dried as necessary.

The heating and drying may be performed under conditions of, for example, 80°C to 90°C, preferably 100°C to 110°C, for, for example, 3 minutes to 4 minutes, preferably 5 minutes to 6 minutes.

The coating liquid can be applied using a common coater such as a gravure roll coater, a reverse roll coater, a kiss roll coater, a dip roll coater, a bar coater, a knife coater, or a spray coater.

The production method according to the present invention does not include opening fiber. When opening fiber is not included, the percentage of voids in the threadlike adhesive body according to the present invention can be set to the range described above.

In the production method according to the present invention, it is preferable that a roller is used in the coating, and the rotation speed of the roller is 0.3 times to 5.0 times the feeding speed of the core material. When the rotation speed of the roller is within the above range, fiber opening of the core material can be prevented, and the percentage of voids in the threadlike adhesive body according to the present invention can be easily set to the range described above.

The rotation speed of the roller is more preferably 0.4 times to 4.0 times, further preferably 0.5 times to 3.0 times, and particularly preferably 0.8 times to 1.5 times the feeding speed of the core material.

In the coating, a tension of 6.0 mN/dtex or less is preferably applied to the core material. When a tension of 6.0 mN/dtex or less is applied to the core material, fiber opening of the core material can be prevented, and the percentage of voids in the threadlike adhesive body according to the present invention can be easily set to the range described above.

The tension applied to the core material is preferably 0.2 mN/dtex to 6.0 mN/dtex, and more preferably 0.4 mN/dtex to 5.0 mN/dtex.

In addition, the viscosity of the coating liquid at a shear rate of 100 (1/s) (hereinafter, may be referred to as "viscosity $\alpha$") is preferably 0.03 Pa s or more, more preferably 0.05 Pa s or more, and still more preferably 0.07 Pa s or more, from the viewpoint of preventing the core material from being exposed without the coating liquid being applied to the core material.

The viscosity $\alpha$ is preferably 6 Pa•s or less, more preferably 5 Pa•s or less, and still more preferably 4 Pa•s or less, from the viewpoint of preventing the core material from being exposed due to roughness of the coated surface, for example, when the coating liquid does not flow, and when the coating liquid is not applied to the core material, lumps are generated or unevenness is generated.

The viscosity $\alpha$ is expected to be close to the viscosity of the coating liquid during coating.

The viscosity of the coating liquid under the condition of a shear rate of 0.1 (1/s) (hereinafter, may be referred to as "viscosity $\beta$") is preferably 2 Pa s or more, more preferably 4 Pa s or more, and still more preferably 6 Pa s or more, from the viewpoint of preventing the core material from being exposed due to repelling of the coating liquid in the steps from coating to drying.

The viscosity $\beta$ is preferably 140 Pa s or less, more preferably 120 Pa s or less, and still more preferably 100 Pa s or less, from the viewpoint of leveling properties.

The viscosity $\beta$ indicates the degree of fluidity of the coating liquid from coating to drying.

The viscosity $\alpha$ and the viscosity $\beta$ can be measured according to the methods described in Examples.

[Examples]

Hereinafter, the present invention will be described in more detail with reference to Examples and the like, but the present invention is not limited to the following Examples.

<Example 1>

(Preparation of Coating Liquid 1)

Into a reaction vessel equipped with a condenser, a nitrogen introduction tube, a thermometer, and a stirrer, 40 parts by mass of ion-exchanged water was added, and stirring was performed at 60°C for 1 hour or longer while introducing nitrogen gas to carry out nitrogen substitution. To this reaction vessel, 0.1 parts by mass of 2,2'-azobis[N-(2-carboxyethyl)-2-methylpropionamidine] n hydrate (polymerization initiator) was added. While the system was maintained at 60°C, a monomer emulsion A described below was gradually added dropwise thereto over 4 hours to allow an emulsion polymerization reaction to proceed.

Examples of the monomer emulsion A include an emulsion obtained by adding 98 parts by mass of 2-ethylhexyl acrylate, 1.25 parts by mass of acrylic acid, 0.75 parts by mass of methacrylic acid, 0.05 parts by mass of lauryl mercaptan (chain transfer agent), 0.02 parts by mass of γ-methacryloxypropyltrimethoxysilane (trade name: "KBM-503", manufactured by Shin-Etsu Chemical Co., Ltd.), and 2 parts by mass of sodium polyoxyethylene lauryl sulfate (emulsifier) to 30 parts by mass of ion-exchanged water.

After completion of the dropwise addition of the monomer emulsion A, the system was further kept at 60°C for 3 hours and cooled to room temperature, and the pH was then adjusted to 7 by addition of 10% ammonia water to obtain an acrylic polymer emulsion (water-dispersible acrylic polymer).

A tackifying resin emulsion (trade name: "E-865NT", manufactured by Arakawa Chemical Industries, Ltd.) was added in an amount of 24 parts by mass based on the solid content per 100 parts by mass of the acrylic polymer contained in the above acrylic polymer emulsion. Further, ion exchange water was added to adjust the solid content concentration to 50 mass%, thereby obtaining a coating liquid 1.

(Production of Threadlike Adhesive Body)

As a core material, a multifilament yarn was prepared by twisting one polyester fiber having a fineness of 165 dtex and the number of filaments of 48 for 200 times/m.

The viscosity of the coating liquid 1 was set as shown in Table 1, and the core material was coated by dipping using a coating roller rotating at the same speed as the feeding speed. At this time, the tension described in Table 1 was applied to the core material. Thereafter, the resultant was dried at 100°C for 4 minutes to obtain a threadlike adhesive body having a diameter (width in the lateral direction) of 160 μm and a percentage of voids of 10%.

<Example 2>

A threadlike adhesive body having a diameter (width in the lateral direction) of 450 μm and a percentage of voids of 15% was obtained in the same manner as in Example 1 except that the conditions of the core material used and the tension applied to the core material were as shown in Table 1.

<Example 3>

A threadlike adhesive body having a diameter (width in the lateral direction) of 200 μm and a percentage of voids of 5% was obtained in the same manner as in Example 1 except that the conditions of the core material used and the tension applied to the core material were as shown in Table 1.

<Example 4>

A threadlike adhesive body having a diameter (width in the lateral direction) of 450 μm and a percentage of voids of 14% was obtained in the same manner as in Example 1 except that the conditions of the core material used and the tension applied to the core material were as shown in Table 1.

<Example 5>

A threadlike adhesive body having a diameter (width in the lateral direction) of 450 μm and a percentage of voids of 14% was obtained in the same manner as in Example 1 except that the conditions of the core material used and the tension applied to the core material were as shown in Table 1.

<Example 6>

A threadlike adhesive body having a diameter (width in the lateral direction) of 450 $\mu$m and a percentage of voids of 19% was obtained in the same manner as in Example 1 except that the conditions of the core material used and the tension applied to the core material were as shown in Table 1.

<Example 7>

A threadlike adhesive body having a diameter (width in the short direction) of 450 $\mu$m and a percentage of voids of 5% was obtained in the same manner as in Example 1 except that the conditions of the core material used and the tension applied to the core material were as shown in Table 1.

<Example 8>

A core material under the conditions shown in Table 1 was prepared.
The core material was placed on a separator having an adhesive thickness of 40 $\mu$m, and an adhesive obtained by drying the coating liquid 1 at 100°C for 4 minutes was wound while being transferred around the core material, thereby obtaining a threadlike adhesive body having a diameter (width in the lateral direction) of 450 $\mu$m and a percentage of voids of 19%.

<Example 9>

A core material under the conditions shown in Table 1 was prepared.
The core material was placed on a separator having an adhesive thickness of 20 $\mu$m, and an adhesive obtained by drying the coating liquid 1 at 100°C for 4 minutes was wound while being transferred around the core material, thereby obtaining a threadlike adhesive body having a diameter (width in the lateral direction) of 450 $\mu$m and a percentage of voids of 47%.

<Comparative Example 1>

A core material under the conditions shown in Table 1 was prepared.
The solid content concentration and viscosity of the coating liquid 1 were as shown in Table 1, and the core material was coated with the coating liquid 1 by dipping while being subjected to fiber opening. At this time, the tension described in Table 1 was applied to the core material. Thereafter, the resultant was dried for 5 minutes to obtain a threadlike adhesive body having a diameter (width in the lateral direction) of 200 $\mu$m.

<Comparative Example 2>

A core material under the conditions shown in Table 1 was prepared.
The core material was placed on a separator having an adhesive thickness of 10 $\mu$m, and an adhesive obtained by drying the coating liquid 1 at 100°C for 4 minutes was wound while being transferred around the core material, thereby obtaining a threadlike adhesive body having a diameter (width in the lateral direction) of 450 $\mu$m.

<Comparative Example 3>

(Preparation of Coating Liquid 2)

Into a reaction vessel equipped with a condenser, a nitrogen inlet tube, a thermometer, a dropping funnel, and a stirrer, 69 parts by mass of toluene, 163 parts by mass of ethyl acetate as a solvent, 80 parts by mass of butyl acrylate, 20 parts by mass of 2-ethylhexyl acrylate, 3 parts by mass of acrylic acid, 5 parts by mass of vinyl acetate, 0.1 parts by mass of 2-hydroxyethyl acrylate, and 0.2 parts by mass of 2,2-azobisisobutyronitrile as an initiator were added, and the mixture was polymerized in a nitrogen stream at 60°C for 6 hours to obtain a solution of an acrylic polymer.
To this solution, 30 parts by mass of a polymerized rosin ester resin and 1.5 parts by mass (in terms of solid content) of an isocyanate-based crosslinking agent (trade name "CORONATE L", manufactured by Nippon Polyurethane Industry Co., Ltd.) were blended with respect to 100 parts by mass of the polymer component in the solution to obtain a coating liquid 2.

(Production of Adhesive Tape)

The coating liquid 2 was applied onto a silicone-treated release liner (release liner A) having a thickness of 135 μm using an applicator, and dried at 110°C for 3 minutes to obtain an adhesive layer having a thickness of 50 μm.

A black polyethylene foam substrate (trade name: "Volara XL-HN # 03001W Shorikuro", manufactured by Sekisui Chemical Co., Ltd., thickness: 0.10 mm, foaming ratio: 2.9 cc/g) was bonded onto the adhesive layer so as to be in contact with the adhesive layer, thereby obtaining a single-sided adhesive tape T having a layer configuration of release liner A/adhesive layer/foam substrate.

Next, the coating liquid 2 was applied onto a release liner B using an applicator, and dried at 110°C for 3 minutes to obtain an adhesive layer having a thickness of 50 μm.

The single-sided adhesive tape T was bonded onto the adhesive layer so that the adhesive layer was in contact with the foam substrate, and then the release liner B was peeled off to obtain a double-sided foamed adhesive tape having a layer structure of release liner A/adhesive layer/foam substrate/adhesive layer.

(Viscosity of Coating Liquid)

A viscosity of the coating liquid was measured when a shear rate was changed from a high speed (viscosity decrease) to a low speed (viscosity recovery).

Specifically, 1 g of a sample (coating liquid) was placed in a measurement plate (MP35 Steel, 18/8, sensor: Rottor C35/1, Cone with D = 35 mm, 1° Titan, gap between plates: 0.225 mm), and the solution viscosity (Pa•s) of the coating liquid was first measured at a shear rate of 0.01 (1/s) for 10 seconds under a condition of 23°C using a viscosity-viscoelasticity measuring device (manufactured by HAAKE, rheometer, trade name: "RS-600"). Thereafter, the shear rate was changed to 9000 (1/s) (A) over 20 seconds, and then, the shear rate returned to 0.01 (1/s) (B) over 20 seconds, and the solution viscosity (Pa•s) of the coating liquid during this period was measured.

A value of the solution viscosity (Pa•s) of the coating liquid at a time point when a shear rate was 100 (1/s) during the period in which the above shear rate was changed to 9000 (1/s) (A) was the solution viscosity (Pa•s) at a shear rate of 100 (1/s). A value of the solution viscosity (Pa•s) of the coating liquid at a time point when a shear rate was 0.1 (1/s) during the period in which the shear rate returned to 0.01 (1/s) (B) was the solution viscosity (Pa•s) at a shear rate of 0.1 (1/s).

(Tension of Core Material)

The tension of the core material was measured using a digital force gauge (AD-4932A) during coating. Specifically, the tension between a feeding location of the core material and a coating roller was measured by reading the stress applied to a terminal of the force gauge.

(Percentage of voids: Examples 1 to 9 and Comparative Examples 1 and 2)

A percentage of voids in the threadlike adhesive body was calculated using an X-ray CT apparatus (Xradia 520 Versa, manufactured by Zeiss, tube voltage 60 kV, tube current 83 μA, pixel size 1.5 μm/pixel).

Specifically, 1601 continuous transmission images with respect to the entire circumference of 0° to 360° of the threadlike adhesive body were captured. Regarding data obtained by three-dimensionally reconstructing the obtained image using image analysis software [Image J, AVIZO (manufactured by Thermo Fisher Scientific)], the air contained in the core material, the adhesive, and the inside of the threadlike adhesive body was subjected to ternarization and noise removal based on the luminance to perform identification. The identification was performed by checking the luminance of each of the air and the adhesive and setting a first threshold value by an intermediate value thereof, and further checking the luminance of each of the adhesive and the core material and setting a second threshold value by an intermediate value thereof. Using the images obtained by the ternarization, the volume ratios of the core material, the air, and the adhesive were calculated to obtain the percentage of voids in the threadlike adhesive body. Results are shown in Table 1.

When the percentage of voids was calculated, 2 cm of the sample was set in an X-ray CT apparatus, and a fiber direction (longitudinal direction) length of 2.7 mm was cut out to calculate the percentage of voids.

In Examples 1 to 9, it was checked by the X-ray CT apparatus that the core material was covered with the adhesive and the core material was impregnated with the adhesive.

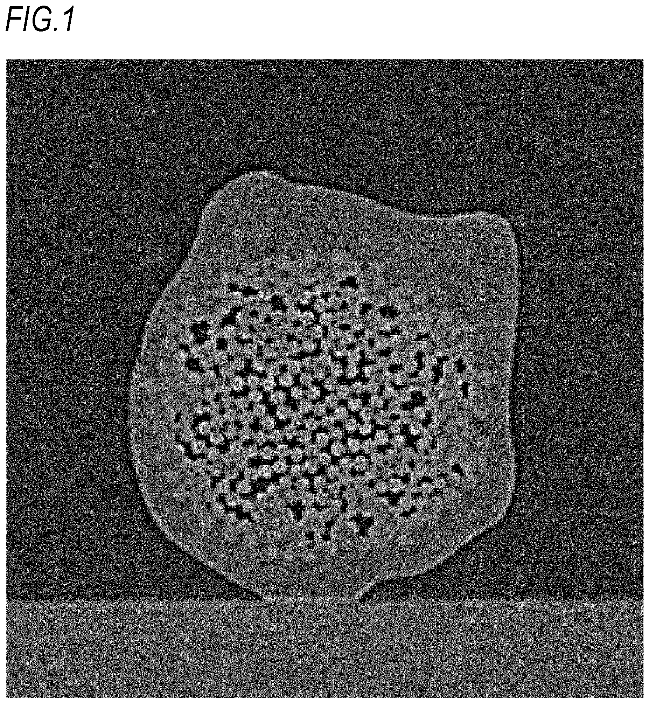

In addition, a cross-sectional photograph of the threadlike adhesive body in Example 2 was obtained by an X-ray CT apparatus. The cross-sectional photograph is shown in FIG. 1.

(Percentage of voids: Comparative Example 3)

The percentage of voids in the foam substrate was calculated based on the following formula.

$$\text{Foaming ratio} = 1/(1 - \text{percentage of voids})$$

When the adhesive layer thickness was set to 50 $\mu$m (the total thickness of the adhesive layers: 100 $\mu$m), and the foam substrate thickness was set to 100 $\mu$m, the percentage of voids in the entire double-sided foamed adhesive tape was calculated. Results are shown in Table 1.

(a/b Value)

"a" which represents a length of a straight line which has the largest total length and can be disposed in the void, and "b" which represents a length of a portion having the largest width in a cross section obtained by cutting the threadlike adhesive body perpendicularly to the longitudinal direction were measured by the X-ray CT apparatus described above.

Specifically, 1601 continuous transmission images with respect to the entire circumference of 0° to 360° of the threadlike adhesive body were captured. Regarding data obtained by three-dimensionally reconstructing the obtained image using image analysis software [Image J, AVIZO (manufactured by Thermo Fisher Scientific)], the air contained in the core material, the adhesive, and the inside of the threadlike adhesive body was subjected to ternarization and noise removal based on the luminance to perform identification. The identification was performed by checking the luminance of each of the air and the adhesive and setting a first threshold value by an intermediate value thereof, and further checking the luminance of each of the adhesive and the core material and setting a second threshold value by an intermediate value thereof. The value of a/b was calculated using the image obtained by the ternarization. Results are shown in Table 1.

When the value of a/b was calculated, 2 cm of the sample was set in an X-ray CT apparatus, and a fiber direction (longitudinal direction) length of 2.7 mm was cut out to calculate the value of a/b.

(Evaluation of Impact Resistance)

The impact resistance of the threadlike adhesive body or the double-sided foamed adhesive tape was evaluated by the following method.

First, a first member and a second member as described below were prepared.

First member: a square acrylic plate having an edge of 70 mm and a thickness of 3 mm
Second member: a rectangular polycarbonate resin plate having a short edge of 80 mm, a long edge of 110 mm, and a thickness of 10 mm in which a rectangular slit (short edge of 30 mm, long edge of 40 mm) is provided in a central portion.

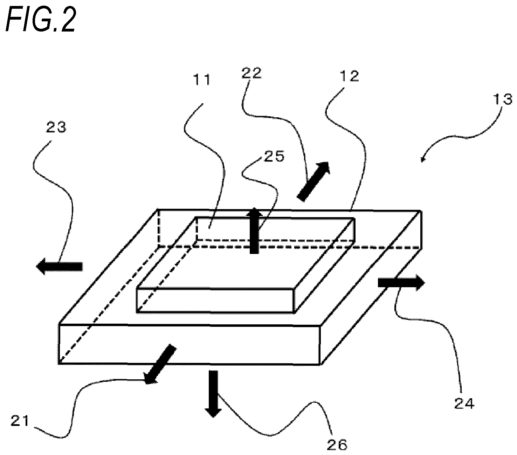

Next, the threadlike adhesive body or the double-sided foamed adhesive tape was attached to the first member at four edges so as to have a rectangular shape of 50 mm × 60 mm. Then, the first member and the second member were bonded to each other such that a center of the first member and a center of the slit of the second member coincided with each other, and a joint body was obtained by pressure-bonding at 0.3 MPa for 20 seconds. A schematic view of the joint body is shown in FIG. 2.

Then, the joint body was dropped from a height of 5 cm to an iron plate in an order of the arrows 21 to 26 in directions of the arrows 21 to 26 in FIG. 2. This was regarded as one set, and when both members were not debonded at the time point of completion of three sets (18 drops in total), the height was increased. The same operation was performed by increasing the height in an order of 15 cm, 30 cm, 60 cm, and 90 cm starting from the height of 5 cm. The number of drops at the time point when both members are debonded is shown in Table 1.

(Evaluation of Reworkability)

A square acrylic plate (one edge: 70 mm, thickness: 3 mm) and a threadlike adhesive body of 5 cm or double-sided foamed adhesive tape were prepared. A threadlike adhesive body or the double-sided foamed adhesive tape was attached to the acrylic plate so that the threadlike adhesive body of 1cm or the double-sided foamed adhesive tape protruded from the acrylic plate.

Thereafter, an acrylic plate having the same shape was placed on the threadlike adhesive body or the double-sided foamed adhesive tape, and pressure-bonded at 0.3 MPa for 20 seconds to obtain a joint body. The protruded threadlike adhesive body or double-sided foamed adhesive tape was pulled in a direction perpendicular to the longitudinal direction of the threadlike adhesive body or the double-sided foamed adhesive tape, and evaluated according to the following evaluation criteria. Results are shown in Table 1.

A: The threadlike adhesive body or the double-sided foamed adhesive tape could be pulled out without breaking the core material or the substrate.

B: The core material or the substrate was broken or the threadlike adhesive body or the double-sided foamed adhesive tape could not be pulled out when the threadlike adhesive body or the double-sided foamed adhesive tape was pulled out.

Table 1

| | | | Example 1 | Example 2 | Example 3 | Example 4 | Example 5 | Example 6 |
|---|---|---|---|---|---|---|---|---|
| Core material | Fineness (dtex) | | 165 | 1155 | 280 | 1155 | 1155 | 1155 |
| | Number of polyester fibers | | 1 | 7 | 1 | 7 | 7 | 7 |
| | Number of filaments (number of substrates) | | 48 | 336 | 48 | 336 | 336 | 336 |
| | Number of twists (twist/m) | | 200 | 70 | 150 | 150 | 350 | 500 |
| Coating condition | Solid content concentration of coating liquid (mass%) | | 50 | 50 | 50 | 50 | 50 | 50 |
| | Viscosity of coating liquid (Pa•s) | Shear rate of 100 (1/s) | 0.4 | 0.4 | 0.4 | 0.4 | 0.4 | 0.4 |
| | | Shear rate of 0.1 (1/s) | 47 | 47 | 47 | 47 | 47 | 47 |
| | Tension (mN/dtex) | | 4.2 | 1.3 | 4.2 | 1.3 | 1.3 | 1.3 |
| | Coating roller rotation speed/feeding speed | | 1 | 1 | 1 | 1 | 1 | 1 |
| Diameter (μm) | | | 160 | 450 | 200 | 450 | 450 | 450 |
| Percentage of voids (vol%) | | | 10 | 15 | 5 | 14 | 14 | 19 |
| a/b | | | 16.9 | 6 | 13.5 | 6 | 6 | 6 |
| Evaluation | Impact resistance | Number of drops | 35 | 71 | 30 | 52 | 55 | 44 |
| | Reworkability | | A | A | A | A | A | A |

| | | | Example 7 | Example 8 | Example 9 | Comparative Example 1 | Comparative Example 2 | Comparative Example 3 |
|---|---|---|---|---|---|---|---|---|
| Core material | Fineness (dtex) | | 1155 | 1155 | 1155 | 280 | 1155 | - |
| | Number of polyester fibers | | 7 | 7 | 7 | 1 | 7 | - |
| | Number of filaments (number of substrates) | | 336 | 336 | 336 | 48 | 336 | - |
| | Number of twists (twist/m) | | 70 | 70 | 70 | 150 | 70 | - |
| Coating condition | Solid content concentration of coating liquid (mass%) | | 46 | 50 | 50 | 45 | 50 | - |
| | Viscosity of coating liquid (Pa·s) | Shear rate of 100 (1/s) | 0.4 | - | - | 0.12 | - | - |
| | | Shear rate of 0.1 (1/s) | 47 | - | - | 10 | - | - |
| | Tension (mN/dtex) | | 1.3 | - | - | 4.2 | - | - |
| | Coating roller rotation speed/feeding speed | | 0.5 | - | - | 0 | - | - |
| Diameter (μm) | | | 450 | 450 | 450 | 200 | 450 | 1,000 (width) |
| Percentage of voids (vol%) | | | 5 | 19 | 47 | 0 | 57 | 33 |
| a/b | | | 6 | 6 | 6 | 13.5 | 6 | 0.5 |
| Evaluation | Impact resistance | Number of drops | 52 | 43 | 50 | 13 | 38 | 43 |
| | Reworkability | | A | A | A | A | A | B |

From Table 1, when Examples 1 and 3 and Comparative Example 1 having close diameters were compared, it was found that the threadlike adhesive body of Example 1 had higher impact resistance.

Similarly, when Examples 2 and 4 to 9 and Comparative Example 2 having the same diameter were compared, it was found that the threadlike adhesive bodies of Examples 2 and 4 to 9 had higher impact resistance.

In addition, it was found that Comparative Example 3 had low impact resistance and poor reworkability.

Although the present invention has been described in detail and with reference to particular embodiments, it will be apparent to those skilled in the art that various changes and modifications can be made without departing from the spirit and scope of the present invention. The present application is based on Japanese Patent Application No. 2020-165590 filed on September 30, 2020, the contents of which are incorporated herein as reference.

REFERENCE SIGNS LIST

11 first member
12 second member
13 joint body
21 arrow
22 arrow
23 arrow
24 arrow
25 arrow
26 arrow

**Claims**

1. A threadlike adhesive body comprising:

   a core material having a plurality of filaments; and
   an adhesive,
   wherein the adhesive covers the core material,
   the core material is impregnated with the adhesive, and
   the threadlike adhesive body contains 1 vol% to 55 vol% of voids.

2. The threadlike adhesive body according to claim 1, wherein

   the threadlike adhesive body satisfies the following formula (1):

$$a/b \geq 2 \quad (1)$$

   in the formula (1), a means a length of a straight line which has the largest total length and can be disposed in the void, and b means a length of a portion having the largest width in a cross section obtained by cutting the threadlike adhesive body perpendicularly to a longitudinal direction.

3. The threadlike adhesive body according to claim 1 or 2,
   wherein the number of twists of the core material is 1 twist/m to 500 twists/m.

4. A method for producing a threadlike adhesive body including a core material having a plurality of filaments and a pressure-sensitive adhesive, the method comprising:

   coating the core material with a coating liquid containing the adhesive,
   wherein opening a fiber is not included.

5. The method for producing a threadlike adhesive body according to claim 4,

   wherein a roller is used in the coating,
   and a rotation speed of the roller is 0.3 times to 5.0 times a feeding speed of the core material.

6. The method for producing a threadlike adhesive body according to claim 4 or 5,
   wherein a tension of 6.0 mN/dtex or less is applied to the core material in the coating.

7. The method for producing a threadlike adhesive body according to any one of claims 4 to 6,
   wherein a viscosity of the coating liquid under a condition of a shear rate of 100 (1/s) is 0.03 Pa•s to 6 Pa•s, and a viscosity of the coating liquid under a condition of a shear rate of 0.1 (1/s) is 2 Pa•s to 140 Pa•s.

FIG.1

FIG.2

## INTERNATIONAL SEARCH REPORT

| International application No. |
| --- |
| **PCT/JP2021/035436** |

| A. CLASSIFICATION OF SUBJECT MATTER |
| --- |
| *C09J 201/00*(2006.01)i; *C09J 7/21*(2018.01)i; *C09J 7/38*(2018.01)i<br>FI: C09J7/21; C09J7/38; C09J201/00 |
| According to International Patent Classification (IPC) or to both national classification and IPC |

| B. FIELDS SEARCHED |
| --- |
| Minimum documentation searched (classification system followed by classification symbols)<br>C09J201/00; C09J7/21; C09J7/38 |
| Documentation searched other than minimum documentation to the extent that such documents are included in the fields searched<br><br>Published examined utility model applications of Japan 1922-1996<br>Published unexamined utility model applications of Japan 1971-2021<br>Registered utility model specifications of Japan 1996-2021<br>Published registered utility model applications of Japan 1994-2021 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | WO 2020/071508 A1 (NITTO DENKO CORP.) 09 April 2020 (2020-04-09)<br>claims, paragraph [0037], examples 1-6, 9-17, 20-25 | 1-4, 7<br><br>5-6 |
| Y | JP 4-322762 A (TOYODA GOSEI CO., LTD.) 12 November 1992 (1992-11-12)<br>claims, paragraphs [0016]-[0018], [0023], fig. 1 | 5 |
| Y | JP 2009-262070 A (PANASONIC CORP.) 12 November 2009 (2009-11-12)<br>paragraph [0046], fig. 1 | 5 |
| Y | JP 2013-76186 A (TORAY IND., INC.) 25 April 2013 (2013-04-25)<br>paragraph [0058] | 6 |
| Y | JP 2010-281016 A (THE YOKOHAMA RUBBER CO., LTD.) 16 December 2010<br>(2010-12-16)<br>paragraph [0020] | 6 |
| P, X | WO 2021/065837 A1 (NITTO DENKO CORP.) 08 April 2021 (2021-04-08)<br>claims, production example 1 | 1-4, 6-7 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 November 2021** | **16 November 2021** |
| Name and mailing address of the ISA/JP | Authorized officer |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/035436** |

**C.** **DOCUMENTS CONSIDERED TO BE RELEVANT**

| Category* | Citation of document, with indication, where appropriate, of the relevant passages | Relevant to claim No. |
| --- | --- | --- |
| E, X | JP 2021-161404 A (NITTO DENKO CORP.) 11 October 2021 (2021-10-11) paragraphs [0146]-[0155] | 1-7 |

Form PCT/ISA/210 (second sheet) (January 2015)

## INTERNATIONAL SEARCH REPORT
### Information on patent family members

International application No.

**PCT/JP2021/035436**

| Patent document cited in search report | | | Publication date (day/month/year) | Patent family member(s) | | | Publication date (day/month/year) |
|---|---|---|---|---|---|---|---|
| WO | 2020/071508 | A1 | 09 April 2020 | JP | 2020-76066 | A | |
| | | | | JP | 2020-75489 | A | |
| | | | | WO | 2020/071509 | A1 | |
| | | | | TW | 202018031 | A | |
| JP | 4-322762 | A | 12 November 1992 | (Family: none) | | | |
| JP | 2009-262070 | A | 12 November 2009 | (Family: none) | | | |
| JP | 2013-76186 | A | 25 April 2013 | (Family: none) | | | |
| JP | 2010-281016 | A | 16 December 2010 | (Family: none) | | | |
| WO | 2021/065837 | A1 | 08 April 2021 | JP | 2021-55252 | A | |
| | | | | TW | 202120657 | A | |
| JP | 2021-161404 | A | 11 October 2021 | WO | 2021/200759 | A1 | |

Form PCT/ISA/210 (patent family annex) (January 2015)

**EP 4 223 851 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03231980 A
- JP 2020165590 A